# EUROPEAN PATENT APPLICATION

(11) **EP 4 663 546 A1**
(43) Date of publication of application: **17.12.2025**
(21) Application number: 25181661.7
(22) Date of filing: 10.06.2025
(51) Int. Cl.: B64D 13/06, B64D 13/00

(54) **COOLING AND HUMIDICATION SYSTEM AND METHOD FOR ANIMALS CARRIED IN AN AIRCRAFT COMPARTMENT**

(30) Priority: 13.06.2024 US 202463659463 P; 03.03.2025 US 202519068650
(71) Applicant: The Boeing Company, Arlington, VA 22202 (US)
(72) Inventor: JONES, Nicholas Alexander, ARLINGTON, 22202 (US); MAHRE, Megan E., ARLINGTON, 22202 (US); WISE, Nicole Renee Zajicek, ARLINGTON, 22202 (US)
(74) Representative: Plasseraud IP

(57) **Abstract**

Aircraft cargo compartment airflow distribution system and aircraft cargo compartment airflow distribution sub-assemblies configured to modify a primary aircraft compartment airflow distribution assembly and methods are presently disclosed.

## Description

### RELATED APPLICATION

This Application claims benefit of priority to U.S. Provisional Patent Application Serial No. 63/659,463, filed June 13, 2024.

### TECHNOLOGICAL FIELD

The present disclosure relates generally to the field of air distribution systems in an aircraft cargo compartment. More specifically, the present disclosure relates to the field of aircraft distribution sub-systems in an aircraft cargo compartment configured to modify an aircraft distribution system airflow output.

### BACKGROUND

Typical aircraft can include an aircraft compartment that can be a cargo compartment, with the aircraft compartment typically located beneath a passenger compartment. In addition, non-passenger aircraft can be modified into cargo aircraft for the purpose, for example, of transporting cargo that can include, for example, livestock that can further include, for example, horses, etc. In addition, aircraft cargo compartments can contain regions in the cargo compartment dedicated to a particular cargo type that can include, for example, livestock that can further include, horses, etc.

Unless explicitly identified as such, no statement herein is admitted as prior art merely by its inclusion in the Technological Field section and/or Background section.

### SUMMARY

An airflow distribution sub-assembly for an airflow distribution assembly for an aircraft airflow distribution system, an aircraft airflow distribution system for an aircraft compartment and a method for modifying an airflow to an aircraft compartment are provided in the appended claims.

According to present aspects, apparatuses, systems and methods are disclosed for establishing an aircraft compartment airflow distribution system that is modified, according to present aspects, to form an aircraft compartment airflow distribution sub-assembly that can modify an existing airflow from an air source and from the primary aircraft airflow distribution system to a selected aircraft compartment region, with the airflow directed from the sub-assembly comprising sub-assembly airflow characteristics that can differ from the airflow characteristics of an airflow delivered from the primary aircraft airflow distribution system.

One present aspect is directed to an aircraft airflow distribution system for an aircraft compartment, with the airflow distribution system comprising an airflow distribution assembly that can be equivalently referred to herein as a "primary aircraft airflow distribution assembly". The airflow distribution assembly is in communication with an airflow source, with the airflow distribution assembly comprising an airflow distribution assembly inlet in communication with the airflow source, and with the airflow distribution assembly further comprising at least one airflow distribution assembly outlet, with the airflow distribution assembly configured to dispense a first airflow from the aircraft airflow distribution system and from the airflow distribution assembly to first aircraft compartment footprint of an aircraft compartment. The first airflow includes a first airflow condition (referred to equivalently herein as a "first airflow characteristic"), that can be at least one of a first airflow temperature, a first airflow humidity, and a first airflow velocity. The aircraft airflow distribution system further includes an airflow distribution sub-assembly in communication with the airflow distribution assembly, with the airflow distribution sub-assembly configured to receive at least a portion of the first airflow, with the airflow distribution sub-assembly further configured to dispense a second airflow from the aircraft distribution subassembly, with the second airflow comprising a second airflow condition, (referred to equivalently herein as a "second airflow characteristic"), that can be at least one of a second airflow temperature, a second airflow humidity, and a second airflow velocity. The airflow distribution sub-assembly includes an enclosed conduit, with the enclosed conduit comprising an enclosed conduit first end and further comprising an enclosed conduit second end, with the enclosed conduit first end configured to releasably engage with the at least one airflow distribution assembly outlet. The airflow distribution sub-assembly further comprises a sub-assembly airflow diffuser in communication with the enclosed conduit second end, with the sub-assembly airflow diffuser configured to dispense a second airflow from the aircraft airflow distribution system via the airflow distribution sub-assembly airflow diffuser to an aircraft compartment targeted region having a second footprint, and wherein the aircraft compartment second footprint is smaller than the aircraft compartment first footprint.

**In** another present aspect, the airflow distribution system further comprises an airflow distribution sub-assembly connector comprising an airflow distribution sub-assembly connector first segment, and an airflow distribution sub-assembly connector second segment, with the airflow distribution sub-assembly connector first segment, and with the airflow distribution sub-assembly connector second segment configured to releasably engage with one another.

In another present aspect, the airflow distribution sub-assembly connector first segment and the airflow distribution sub-assembly connector second segment are configured to releasably engage with one another to form an enclosed airflow path through the airflow distribution sub-assembly connector.

In another present aspect, the airflow distribution sub-assembly connector first segment and the airflow distribution sub-assembly connector second segment are configured to releasably engage with one another to form an enclosed airflow path through the enclosed conduit.

In another present aspect, the enclosed conduit comprises at least one of the airflow distribution sub-assembly connector first segment, and an airflow distribution sub-assembly connector second segment.

In another present aspect, at least a portion of the airflow distribution assembly outlet is in communication with the airflow distribution sub-assembly connector first segment, and the enclosed conduit first end is in communication with the airflow distribution sub-assembly connector second segment.

In another present aspect, at least a portion of the airflow distribution assembly outlet is in direct communication with the airflow distribution sub-assembly connector first segment, and the enclosed conduit first end is in direct communication with the airflow distribution sub-assembly connector second segment.

In another present aspect, the airflow distribution assembly outlet comprises the airflow distribution sub-assembly connector first segment, and the enclosed conduit first end comprises the airflow distribution sub-assembly connector second segment.

In another present aspect, the airflow distribution sub-assembly connector comprises a releasable locking mechanism.

In a further present aspect, the enclosed conduit is a flexible enclosed conduit.

In another present aspect, the enclosed conduit is a flexible enclosed conduit comprises a flexible hose.

In another present aspect, the aircraft compartment is a cargo compartment.

In another present aspect, the aircraft compartment is a cargo compartment configured to transport livestock.

In a further present aspect, the first airflow is configured to condition the aircraft compartment first footprint.

In another present aspect, the second airflow is configured to condition the aircraft compartment second footprint.

In another present aspect, at least a portion of the first airflow is dispensed indirectly to the aircraft compartment second footprint.

In another present aspect, the second airflow is dispensed directly to the aircraft compartment second footprint.

A further present aspect is directed to an aircraft compartment comprising an aircraft airflow distribution system, with the aircraft airflow distribution system comprising an airflow distribution assembly that can be equivalently referred to herein as a "primary aircraft airflow distribution assembly". The airflow distribution assembly is in communication with an airflow source, with the airflow distribution assembly comprising an airflow distribution assembly inlet in communication with the airflow source, and with the airflow distribution assembly further comprising at least one airflow distribution assembly outlet, with the airflow distribution assembly configured to dispense a first airflow from the aircraft airflow distribution system and from the airflow distribution assembly to first aircraft compartment footprint of an aircraft compartment. The first airflow includes a first airflow condition, referred to equivalently herein as a "first airflow characteristic", can be at least one of a first airflow temperature, a first airflow humidity, and a first airflow velocity. The aircraft airflow distribution system further includes an airflow distribution sub-assembly in communication with the airflow distribution assembly, with the airflow distribution sub-assembly configured to receive at least a portion of the first airflow, with the airflow distribution sub-assembly further configured to dispense a second airflow from the aircraft distribution subassembly, with the second airflow comprising a second airflow condition, referred to equivalently herein as a "second airflow characteristic", that can be at least one of a second airflow temperature, a second airflow humidity, and a second airflow velocity. The airflow distribution sub-assembly includes an enclosed conduit [hose element], with the enclosed conduit comprising an enclosed conduit first end and further comprising an enclosed conduit second end, with the enclosed conduit first end configured to releasably engage with the at least one airflow distribution assembly outlet. The airflow distribution sub-assembly further comprises a sub-assembly airflow diffuser in communication with the enclosed conduit second end, with the sub-assembly airflow diffuser configured to dispense a second airflow from the aircraft airflow distribution system via the airflow distribution sub-assembly airflow diffuser to an aircraft compartment second footprint [a targeted region], and wherein the aircraft compartment second footprint is smaller than the aircraft compartment first footprint. The airflow distribution system further comprises an airflow distribution sub-assembly connector comprising an airflow distribution sub-assembly connector first segment, and an airflow distribution sub-assembly connector second segment, with the airflow distribution sub-assembly connector first segment, and with the airflow distribution sub-assembly connector second segment configured to releasably engage with one another.

Another present aspect is directed to an aircraft comprising an aircraft compartment that further comprises an airflow distribution system, with the aircraft airflow distribution system comprising an airflow distribution assembly that can be equivalently referred to herein as a "primary aircraft airflow distribution assembly". The airflow distribution assembly is in communication with an airflow source, with the airflow distribution assembly comprising an airflow distribution assembly inlet in communication with the airflow source, and with the airflow distribution assembly further comprising at least one airflow distribution assembly outlet, with the airflow distribution assembly configured to dispense a first airflow from the aircraft airflow distribution system and from the airflow distribution assembly to first aircraft compartment footprint of an aircraft compartment. The first airflow includes a first airflow condition, referred to equivalently herein as a "first airflow characteristic", can be at least one of a first airflow temperature, a first airflow humidity, and a first airflow velocity. The aircraft airflow distribution system further includes an airflow distribution sub-assembly in communication with the airflow distribution assembly, with the airflow distribution sub-assembly configured to receive at least a portion of the first airflow, with the airflow distribution sub-assembly further configured to dispense a second airflow from the aircraft distribution subassembly, with the second airflow comprising a second airflow condition, referred to equivalently herein as a "second airflow characteristic", that can be at least one of a second airflow temperature, a second airflow humidity, and a second airflow velocity. The airflow distribution sub-assembly includes an enclosed conduit, with the enclosed conduit comprising an enclosed conduit first end and further comprising an enclosed conduit second end, with the enclosed conduit first end configured to releasably engage with the at least one airflow distribution assembly outlet. The airflow distribution sub-assembly further comprises a sub-assembly airflow diffuser in communication with the enclosed conduit second end, with the sub-assembly airflow diffuser configured to dispense a second airflow from the aircraft airflow distribution system via the airflow distribution sub-assembly airflow diffuser to an aircraft compartment targeted region having a second footprint, and wherein the aircraft compartment second footprint is smaller than the aircraft compartment first footprint. The airflow distribution system further comprises an airflow distribution sub-assembly connector comprising an airflow distribution sub-assembly connector first segment, and an airflow distribution sub-assembly connector second segment, with the airflow distribution sub-assembly connector first segment, and with the airflow distribution sub-assembly connector second segment configured to releasably engage with one another.

Another present aspect is directed to an airflow distribution sub-assembly for an airflow distribution assembly for an aircraft, with the airflow distribution sub-assembly comprising an enclosed conduit, with the enclosed conduit comprising an enclosed conduit first end and an enclosed conduit second end with the enclosed conduit first end configured to releasably engage with said at least one airflow distribution assembly outlet. The airflow distribution sub-assembly further comprises an airflow distribution sub-assembly connector comprising an airflow distribution sub-assembly connector first segment, and an airflow distribution sub-assembly connector second segment, with the airflow distribution sub-assembly connector second segment configured in fixed communication with the enclosed conduit first end, with the airflow distribution sub-assembly connector first segment and the airflow distribution sub-assembly connector second segment configured to releasably engage one another. The airflow distribution sub-assembly further comprises a sub-assembly airflow diffuser in communication with the enclosed conduit second end. The sub-assembly airflow diffuser is configured to dispense a second airflow from the sub-assembly airflow diffuser to an aircraft compartment second footprint.

In another present aspect, the enclosed conduit second end is integral with the sub-assembly airflow diffuser.

In a further present aspect, the enclosed conduit first end is integral with the airflow distribution sub-assembly connector second segment.

In another present aspect, the airflow distribution sub-assembly further comprises an airflow distribution assembly outlet, with the airflow distribution assembly outlet comprising the airflow distribution sub-assembly connector first segment, and with the airflow distribution assembly outlet comprising the airflow distribution sub-assembly connector first segment configured to releasably receive said airflow distribution sub-assembly connector second segment.

Another present aspect is directed to an aircraft compartment comprising an airflow distribution sub-assembly comprising an enclosed conduit, with the enclosed conduit comprising an enclosed conduit first end and an enclosed conduit second end with the enclosed conduit first end configured to releasably engage with said at least one airflow distribution assembly outlet. The airflow distribution sub-assembly further comprises an airflow distribution sub-assembly connector comprising an airflow distribution sub-assembly connector first segment, and an airflow distribution sub-assembly connector second segment, with the airflow distribution sub-assembly connector second segment configured in fixed communication with the enclosed conduit first end, with the airflow distribution sub-assembly connector first segment and the airflow distribution sub-assembly connector second segment configured to releasably engage one another. The airflow distribution sub-assembly further comprises a sub-assembly airflow diffuser in communication with the enclosed conduit second end. The sub-assembly airflow diffuser is configured to dispense a second airflow from the sub-assembly airflow diffuser to an aircraft compartment second footprint.

Another present aspect is directed to an aircraft comprising an aircraft compartment comprising an airflow distribution sub-assembly comprising an enclosed conduit, with the enclosed conduit comprising an enclosed conduit first end and an enclosed conduit second end with the enclosed conduit first end configured to releasably engage with said at least one airflow distribution assembly outlet. The airflow distribution sub-assembly further comprises an airflow distribution sub-assembly connector comprising an airflow distribution sub-assembly connector first segment, and an airflow distribution sub-assembly connector second segment, with the airflow distribution sub-assembly connector second segment configured in fixed communication with the enclosed conduit first end, with the airflow distribution sub-assembly connector first segment and the airflow distribution sub-assembly connector second segment configured to releasably engage one another. The airflow distribution sub-assembly further comprises a sub-assembly airflow diffuser in communication with the enclosed conduit second end. The sub-assembly airflow diffuser is configured to dispense a second airflow from the sub-assembly airflow diffuser to an aircraft compartment second footprint.

A further present aspect is directed to a method for modifying an airflow to an aircraft compartment, with the method comprising engaging an airflow distribution sub-assembly to an airflow distribution assembly that can be a primary airflow distribution assembly, with the airflow distribution sub-assembly comprising a conduit that can be an enclosed conduit establishing an airflow "through flow" pathway therethrough, with the enclosed conduit comprising an enclosed conduit first end and an enclosed conduit second end, said enclosed conduit first end configured to releasably engage with said at least one airflow distribution assembly outlet, an airflow distribution sub-assembly connector comprising an airflow distribution sub-assembly connector first segment, and an airflow distribution sub-assembly connector second segment, said airflow distribution sub-assembly connector second segment in fixed communication with the enclosed conduit first end, with the airflow distribution sub-assembly connector first segment, with the airflow distribution sub-assembly connector second segment configured to releasably mate with one another, and a sub-assembly airflow diffuser in communication with the enclosed conduit second end, with the sub-assembly airflow diffuser configured to dispense the second airflow from the sub-assembly airflow diffuser to an aircraft compartment second footprint, and wherein the primary airflow distribution assembly is configured to dispense a first airflow to an aircraft compartment first footprint, with the first airflow comprising a first airflow condition. The method further comprises directing at least a portion of a first airflow to form a second airflow, with the said first airflow comprising a first airflow condition, and dispensing the second airflow from the sub-assembly airflow diffuser directly to an aircraft compartment second footprint, and wherein the second airflow comprises a second airflow condition, with the compartment second footprint configured to be smaller than the aircraft compartment first footprint.

According to a present method, and in another aspect, the first airflow condition comprises at least one of a first airflow temperature, a first airflow humidity, and a first airflow velocity as measured in an aircraft compartment first footprint, and the second airflow condition comprises at least one of a second airflow temperature, a second airflow humidity, and a second airflow velocity humidity and a second airflow temperature as measured in an aircraft compartment second footprint.

According to a present method, and in another aspect, the second airflow condition as measured within the aircraft compartment second footprint is different from the first airflow condition as measured beyond the aircraft compartment second footprint.

In a further present aspect, a present method further comprises forming an airflow condition gradient between the aircraft compartment first footprint and the aircraft compartment second footprint.

In another present aspect, a present method further comprises forming at least one of an airflow temperature gradient and an airflow temperature gradient between aircraft compartment first footprint and the aircraft compartment second footprint.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present aspects;
FIG. 2A is a partial exposed view into an aircraft compartment in the form of a cargo bay, according to present aspects;
FIG. 2B is an overhead exposed view into an aircraft compartment in the form of a cargo bay that can be of the type shown in FIG. 2A, according to present aspects;
FIG. 3 is a partial exposed view into an aircraft compartment in the form of a cargo bay that can be of the type shown in FIGs. 2A and 2B, according to present aspects;
FIG. 4 is an enlarged view of a portion of a presently disclosed aircraft airflow distribution system sub-assembly and sub assembly diffuser, according to present aspects;
FIG. 5 is an enlarged view of a portion of a presently disclosed modified aircraft airflow distribution system diffuser in communication with the present aircraft airflow distribution sub-assembly, according to present aspects;
FIG. 6 is a flowchart outlining a presently disclosed method, according to present aspects;
FIG. 7 is a flowchart outlining a presently disclosed method, according to present aspects; and
FIG. 8 is a flowchart outlining a presently disclosed method, according to present aspects.

### DETAILED DESCRIPTION

Present aspects disclose an airflow distribution system for directing, distributing, disbursing, diffusing, etc., an airflow from an air source to a contained area that can be an enclosed or semi-enclosed compartment, region, area, targeted area, etc., within a structure that can be, for example, a cargo compartment of, for example, an aircraft.

According to present aspects, the presently disclosed airflow distribution system and sub-assemblies represent a significant modification and advancement over typical aircraft cargo compartment airflow distribution system where livestock that can be in the form of high-value animals that can, for example, include horses are sensitive to airflow conditions can be excessively stressed as airflow conditions cycle through periods of higher and lower humidity; higher and lower temperatures; higher and lower airflow velocities, etc. Such airflow "cycling" being perceived by an animal in an aircraft cargo compartment has resulted due to the distance of the airflow distribution system outlets from the animal, as well as from the changing air conditions during flight (e.g., differences in air conditions caused between the cruise and on-ground aircraft location during animal transportation).

Present aspects are directed to an airflow distribution sub-assembly that can more directly deliver conditioned airflow to animals in an aircraft cargo compartment, by locating the airflow distribution sub-assembly outlet/diffuser proximate to an animal, with the sub-assembly airflow distribution delivering an airflow having airflow conditions to a targeted and selected cargo compartment region (e.g., footprint), and with the selected airflow conditions (e.g., temperature, humidity, velocity, etc.) maintained within a narrower range within the sub-area or sub-footprint of a cargo area within a cargo compartment to which the airflow is more directly distributed.

The present airflow distribution systems and methods can significantly modify and improve an existing aircraft cargo compartment airflow distribution system responsible for conditioning the entirety of a large cargo compartment footprint by adapting an existing airflow delivery system to engage with the present sub-assemblies that, once engaged with a primary system, can direct and/or redirect at least a portion of the airflow in the existing system to a targeted and selected smaller cargo compartment footprint to better serve the health needs of an animal housed within the smaller footprint in the cargo compartment.

Further present aspects disclose an airflow distribution system that can be a primary airflow distribution system configured to deliver a first airflow that can be a first conditioned airflow to a first region that can have a first footprint and/or first region area within the first footprint. According to further present aspects, the primary airflow distribution system can be modified by including fixtures at or near the primary airflow distribution system outlet(s) that can releasably engage with an airflow distribution sub-assembly (referred to equivalently herein as a "secondary airflow distribution system"), with the airflow distribution sub-assembly configured to deliver a second airflow that can be a second conditioned airflow to a second region that can have a second footprint and/or second region area within the second footprint. The second footprint can be smaller than the first footprint, and the second footprint can exist within, outside of, and/or beyond the first footprint.

According to further present aspects, the first and second airflows can comprise one or more airflow conditions that can include at least one of an airflow temperature, an airflow humidity, and an airflow velocity. In further present aspects, the airflow conditions and the characteristics of the airflow conditions can be configured and otherwise selected to vary from one another. That is, according to present aspects, the first and second airflow conditions that can include the first and second airflow temperature, first and second airflow humidity, and the first and second airflow velocity, can be configured or otherwise selected to vary from one another.

According to present aspects, the present airflow distribution systems and airflow distribution sub-assemblies and components of the sub-assemblies can find utility in vehicles comprising compartments in which airflow distribution and enhanced and conditioned airflow distribution is desirable including, for example, aircraft comprising a compartment having first and second footprints that can contain living cargo including, for example livestock, produce, etc.

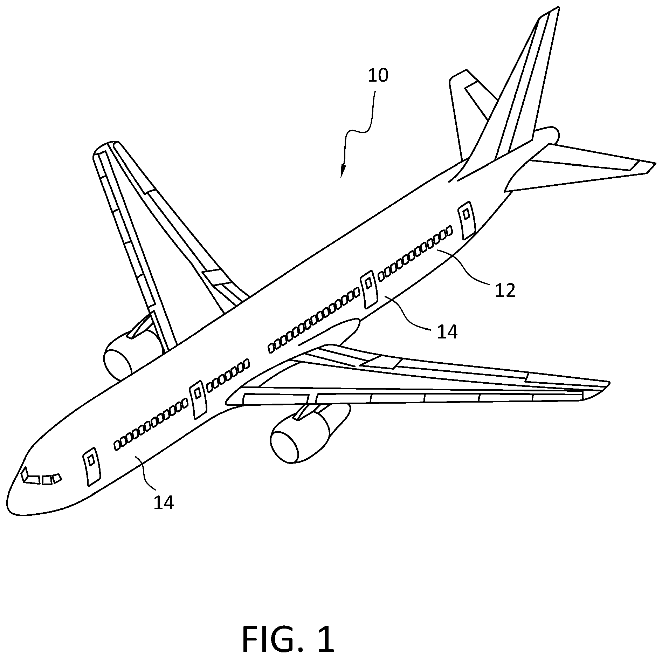

FIG. 1 illustrates a vehicle in the form of an aircraft 10 that can comprise the present airflow distribution systems and airflow distribution sub-assemblies and components of the sub-assemblies. Aircraft 10 comprises a fuselage 12 with an internal aircraft compartment 14 that can be, for example, an enclosed aircraft cargo compartment, and that can be defined, at least in part by internal surfaces of fuselage 12 and/or structures in communication with internal surfaces of fuselage 12.

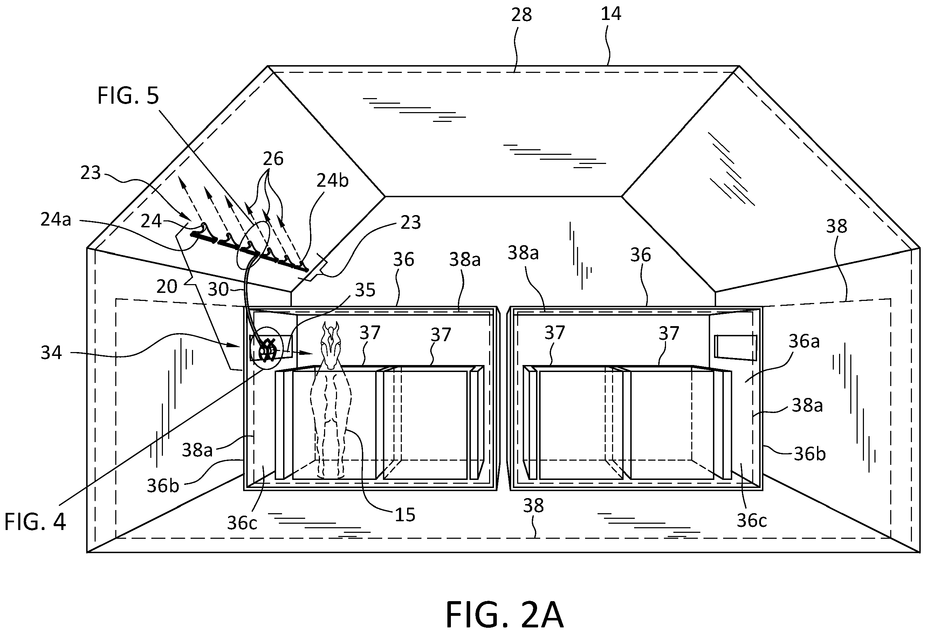

FIG. 2A is an exposed view of an aircraft of the type shown in FIG. 1, with FIG. 2A showing a view into at least a partially exposed portion of aircraft compartment 14. A portion of an aircraft air distribution assembly 23 of the type that may be present in an aircraft compartment is shown comprising an airflow distribution assembly diffuser 24 comprising an airflow distribution assembly diffuser inlet 24a and an airflow distribution assembly diffuser outlet 24b.

A first airflow 26 from an air source (not shown in FIG. 2A) is shown emerging from the airflow distribution assembly 23 at the airflow distribution assembly diffuser outlet 24b, with the first airflow 26 diffusing into the aircraft compartment 14 in a non-targeted fashion that can condition a large region in the aircraft compartment 14 shown in FIG. 2A as a first footprint 28. However, a substantially constant "condition" of the first airflow 26 will not be received throughout (and otherwise equivalently impact the entirety of) the region comprising the first footprint 28. That is, a temperature reading, a humidity reading, an airflow velocity reading of the first airflow taken very near the diffuser outlet may be significantly different than such readings taken at a distance from the diffuser of even 5, 10, 15, or 20 feet. Accordingly, livestock positioned two different locations within the first footprint 28 may receive significantly different airflow conditions from an airflow delivered from a typical airflow distribution system.

As shown in FIG. 2A, typical conditions for livestock, such as a horse 15, being transported in a cargo compartment 14 of an aircraft may advise a transported environment having a particular temperature range and/or a particular humidity range that can be difficult to establish, and/or regulate, and/or reliably monitor. In addition, failing to establish, maintain, and monitor a typical transported environment condition may result in transported livestock becoming undesirably agitated, stressed, uncomfortable, etc., that may lead to, for example, temporary or sustained illness, etc., for example.

The presently disclosed and greatly improved airflow distribution systems and methods, according to present aspects, provide at least one of a directed, modified, tailorable, tailored, and controllable selected airflow delivery and airflow distribution to a selected (smaller) footprint that is configured to result in an airflow delivery having has a significantly increased airflow condition consistency within and across a selected target region, with the selected target region having a selected footprint.. As shown in FIG. 2A, according to present aspects, airflow distribution system 20 can comprise elements of an airflow distribution assembly 23 that can be a primary airflow distribution assembly that is in direct communication with an airflow source (not shown in FIG. 2A). The airflow distribution system 20 can further incorporate the presently disclosed airflow distribution system sub-assembly 30 that is in communication with the airflow distribution assembly 23, and is indirectly in communication with an airflow source.

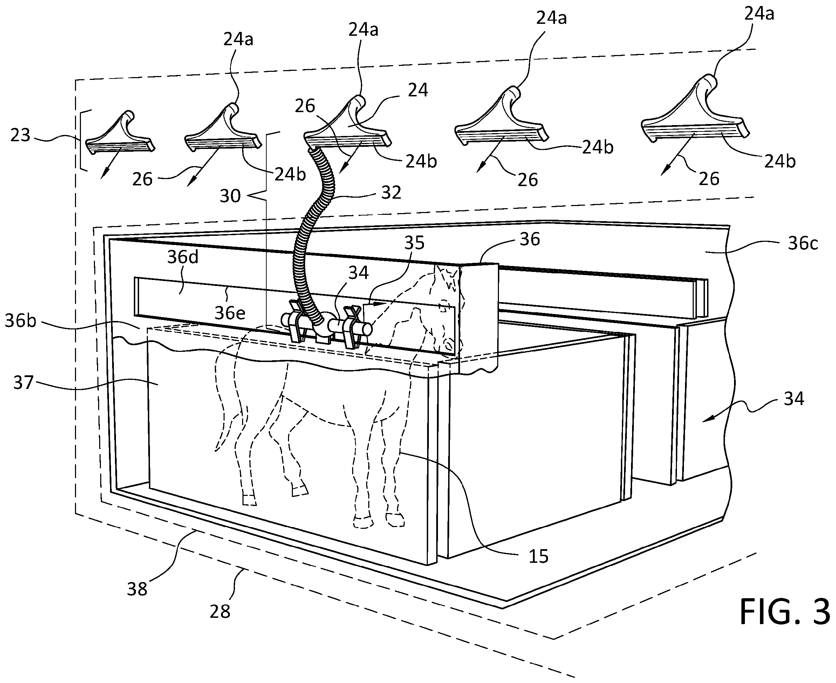

According to one present example, the airflow distribution system sub-assembly 30 is in communication with the airflow distribution assembly 23 and can be releasably attached to the airflow distribution assembly diffuser outlet 24b of the airflow distribution assembly 23. According to present aspects, the airflow distribution assembly diffuser outlet 24b is modified and is otherwise dimensioned and configured to receive elements of the airflow distribution system sub-assembly 30 (and shown in greater detail herein at least in FIGs. 3, 4, 5, 6, and 7).

FIG. 2A further shows two (2) adjacently positioned cargo sub-compartments 36 that, as shown, each comprise two (2) sub-compartment stalls 37, each of which can be configured to house a cargo that can be a living cargo including, for example, (and as illustrated in FIG. 2A a horse. Present aspects are not limited to a specified number of cargo sub-compartments 36 and/or a specified number of sub-compartment stalls 37. The cargo sub-compartments 36 comprise a cargo sub-compartment wall 36, with the cargo sub-compartment wall comprising a cargo sub-compartment wall first side 36b ("outer wall") and a cargo sub-compartment wall second side 36c ("inner wall"). As shown in FIG. 2A the cargo sub-compartments collectively are configured to occupy a three-dimensional area that forms an aircraft sub-compartment second footprint 38 that can exist within the aircraft compartment first footprint 28, with the three-dimensional area contained within the aircraft sub-compartment second footprint 38 being smaller that the three-dimensional area contained within the aircraft compartment first footprint 28. FIG. 2A further shows a first airflow 26 delivered from airflow distribution assembly 23 into the aircraft compartment first footprint 28, and a second airflow 35 being delivered by and from the airflow distribution system sub-assembly 30 directly into the aircraft sub-compartment second footprint 38.

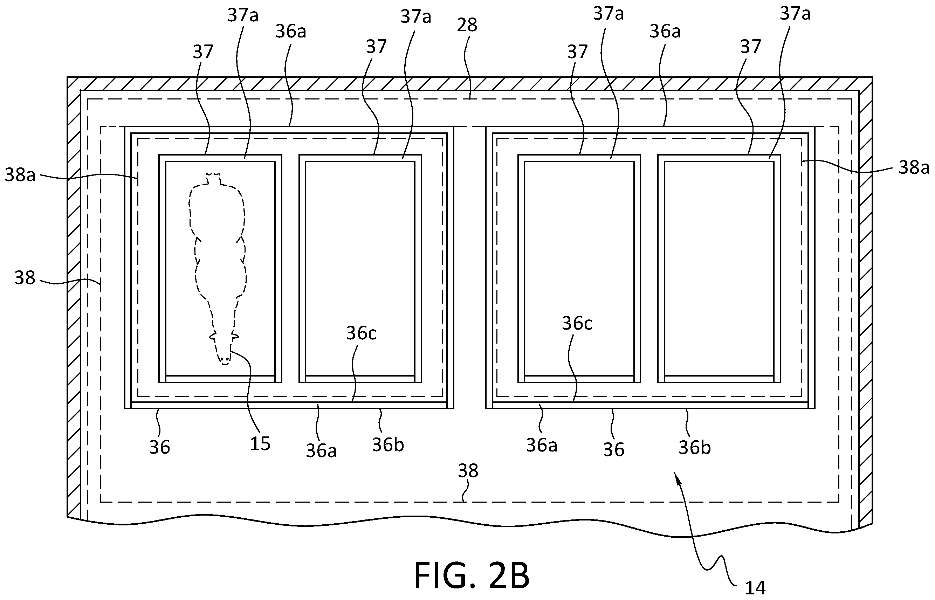

FIG. 2B is an overhead and exposed view of the aircraft compartment 14 of the type shown in FIG. 2A. As shown in FIG. 2B, the aircraft compartment 14 comprises a three-dimensional area and/or region within the aircraft compartment 14 that forms an aircraft compartment first footprint 28. FIG. 2B further shows cargo sub-compartments 36, that are configured to occupy a three-dimensional area within the first footprint 28 that forms an aircraft sub-compartment second footprint 38, with the three-dimensional area contained within the aircraft sub-compartment second footprint 38 being smaller that the three-dimensional area contained within the aircraft compartment first footprint 28. FIG. 2B further illustrates a sub-division of the aircraft sub-compartment second footprint 38 that surrounds or is otherwise occupied the cargo-sub-compartment stalls 37, with each sub-compartment stall 37 within the sub-division each occupying a third footprint 38a, referred to equivalently herein as the "aircraft sub-compartment stall third footprint" 38a.

FIG. 3 shows a further partially exposed view of the aircraft compartment 14 (referred to equivalently herein as the "aircraft cargo compartment" 14) of the type shown in FIGs. 2A and 2B, with livestock in the form of a horse 15 contained in position within a sub-compartment stall 37 of a cargo sub-compartment 36, with sub-compartment stall 37 further comprising a sub-compartment stall wall 37a, and with cargo sub-compartment 36 further comprising a cargo sub-compartment window 36d defined by a cargo sub-compartment window perimeter 36e, and with cargo sub-compartment wall 36a, further comprising a cargo sub-compartment wall first side 37b (shown in FIG. 3 as a "wall outer side") and cargo sub-compartment wall second side 37c (shown in FIG. 3 as a "wall inner side").

According to present aspects, the present airflow distribution system sub-assembly 30 comprises an enclosed conduit that can be, for example, a flexible hose that can be made from a resilient material that can be, for example, a rubber-based material, a plastic based material, etc., and that is configured, at a conduit first end, to releasably engage with the outlet of a primary airflow distribution assembly. The enclosed conduit second end is configured to engage with an airflow distribution system sub-assembly airflow diffuser that is positioned and otherwise configured to dispense, distribute, deliver, etc., a targeted airflow having at least one selected airflow condition (referred to herein as the "second airflow") from the airflow distribution system sub-assembly directly to a targeted region, targeted area, etc. within the second footprint 38.

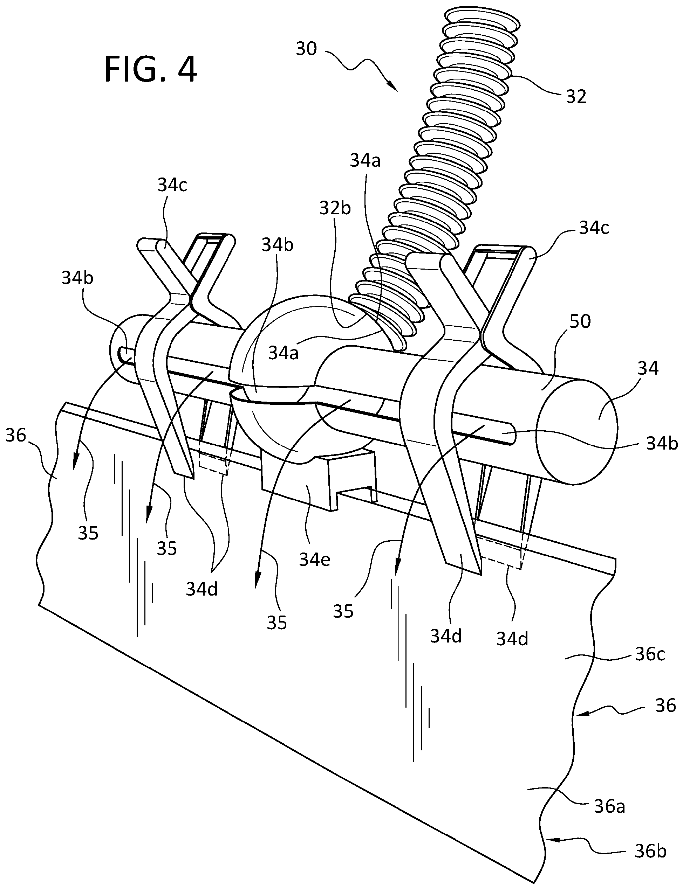

FIG. 4 is an enlarged partial view of a portion of the present airflow distribution system sub-assembly 30 of the type shown in FIGs. 2A, 2B, and 3. As shown in FIG. 4, enclosed conduit 32 (that can be a flexible tube that can further be a flexible hose) can have open first and second enclosed conduit ends and/or can be configured to allow a passage of air in the form of a directed airflow along an airflow direction from the conduit first end and through the length of the enclosed conduit toward and eventually to and out of the enclosed conduit through the conduit second end. The presently intended airflow path to and through the enclosed conduit can originate from an air source (not shown) that is initially directed to and through the primary airflow distribution system, and with the airflow then proceeding from the primary airflow distribution system onward to and through the presently disclosed airflow distribution sub-assembly that is said to be in communication with the airflow source.

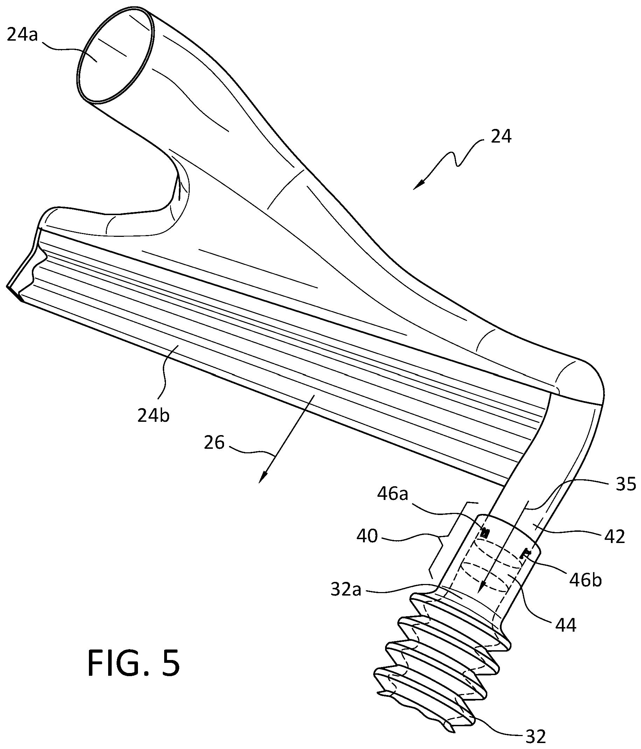

Enclosed conduit 32, at least as shown in the FIGs. can comprise an enclosed conduit first end 32a that is releasably engaged with and otherwise releasably attached to an airflow distribution assembly diffuser 24 of the primary, airflow distribution assembly (with the enclosed conduit first end 32a and its attachment to the diffuser 24 shown in greater detail in FIG. 5, and not shown in FIG. 4). Enclosed conduit 32 further comprises an enclosed conduit second end 32b that is in communication with and that can be fixedly attached to a sub-assembly airflow diffuser inlet 34a of a sub-assembly airflow diffuser 34. As further shown in FIG. 4, the sub-assembly airflow diffuser 34 of airflow distribution system sub-assembly 30 and of overall airflow distribution system 20 (that comprises the airflow distribution system sub-assembly 30) can be releasably secured and otherwise positioned and attached directly onto a structure proximate to a targeted region, such as the second footprint area that comprises the cargo-sub-compartment 36 and with the cargo sub-compartment further comprising and otherwise containing the sub-compartment stalls 37.

In one example, and as shown in FIG. 4, the sub-assembly airflow diffuser 34 of airflow distribution system sub-assembly 30 further comprises a sub-assembly airflow diffuser support fastener 34c that further comprises a sub-assembly airflow diffuser support fastener end 34d that engages with the cargo sub-compartment wall 36c. Sub-assembly airflow diffuser 34, as shown in FIG. 4 further comprises an additional point of attachment shown as diffuser stabilizer 34e that can further facilitate a secure positioning of the sub-assembly airflow diffuser 34 onto the cargo sub-compartment wall 36c. In operation, when an airflow is established between an air source (not shown), such airflow, as shown in FIG. 5, enters sub-assembly airflow diffuser 34 via sub-assembly airflow diffuser 34a, with the airflow then emerging from and otherwise directed from the sub-assembly airflow diffuser 34 as a directed sub-assembly airflow 35 (referred to equivalently herein as a sub-assembly second airflow 35) via sub-assembly airflow diffuser outlet 34b. The directed sub-assembly airflow 35 is then directed to a selected target positioned proximate to the sub-assembly airflow diffuser 34 that can include a high-value animal that can be, for example, a horse.

Although FIGs. 3 and 4 show one sub-assembly positioned and secured to a sub-compartment, present aspects contemplate the positioning of any selected number of sub-assemblies and sub-assembly diffusers to deliver to the cargo housed within the sub-compartment an airflow having a t least one selected airflow condition. That is, the present airflow distribution subassemblies can comprise 1, 2, 3, 4, 5 or more diffuser outlets emanating from a primary system, or emanating from a sub-assembly conduit. In addition, present aspects contemplate positioning any selected number of sub-assembly diffuser onto or in close proximity to a sub-compartment, with each one of a plurality of sub-assemblies connected to an individual primary airflow distribution system outlet.

According to present aspects, the directed sub-assembly airflow 35 comprises at least one intended sub-assembly airflow condition that can include at least one of an airflow temperature, an airflow humidity, an airflow velocity, etc.

FIG. 5 is an enlarged and partially cross-sectional view of the present airflow distribution sub-assembly connector 40, referred to equivalently herein as sub-assembly connector 40, that is configured to connect the enclosed conduit first end 32a of enclosed conduit 32 to the airflow distribution assembly diffuser 24. The enclosed conduit first end 32a can internally comprise a portion of the connector 40 that is the connector (second) segment 44 that is dimensioned and otherwise configure to mate with a connector (first) segment 42 that can be a segment that extends from and is otherwise integral with the airflow distribution assembly diffuser 24 of the airflow distribution assembly (that is referred to equivalently herein as the "main airflow distribution assembly" and/or the "primary airflow distribution assembly").

The connector first segment 42 and the connector second segment 44 can mate and can otherwise be releasably engaged via releasable locking mechanisms 46a, 46b to form the connector 40. That is, when connector first segment 42 and connector second segment are mated to releasably engage, connector 40 is formed and established to connect the majority of the parts of the airflow distribution of the airflow distribution sub-assembly 30 (for example, the majority of the parts including at least the connector second segment 44, the enclosed conduit 32, and the sub-assembly airflow diffuser 34) to the airflow distribution assembly 23 at the airflow distribution assembly diffuser 24 to form the present overall airflow distribution system 20 that comprises the present airflow distribution system sub-assembly 30. As shown in FIG. 5, the

Further present aspects contemplate the enclosed conduit first end itself being dimensioned and otherwise configured to join the airflow distribution assembly diffuser 24 in a friction fit that will maintain the airflow distribution system sub-assembly 30 in a fixedly and releasably attached configuration until disassembly of the airflow distribution system sub-assembly 30 from the airflow distribution assembly diffuser 24 is desired by, for example, applying a force to the enclosed conduit that is sufficient to overcome the frictional fit to disengage the enclosed conduit first end 32a from the airflow distribution assembly diffuser 24.

The connector 40 can comprise any multi-piece construction that can reliably, resiliently, and releasably mate to form connector 40 that can form a substantially air-tight seal to efficiently direct an airflow through the connector 40 from an air source via the airflow distribution assembly diffuser 24 and into the enclosed conduit 32 of the airflow distribution sub-assembly 30.

According to present aspects, connector 40 in combination with the conduit 32 (e.g., including the connector 40 being integral with the conduit 32) can increase the durability and structural robustness and useful life of the conduit 32 (e.g., including the conduit first end 32a) as the sub-assembly incurs repeated engagement and disengagement cycle with and from a primary airflow distribution assembly (e.g., including with and from a primary airflow distribution assembly diffuser)..

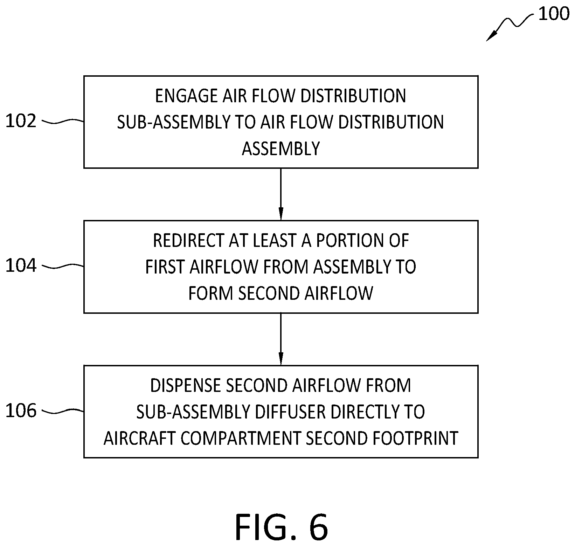

FIGs. 6, 7, and 8 are flowcharts describing further presently disclosed aspects directed to methods for establishing the presently disclosed aircraft compartment airflow distribution systems and sub-assemblies.

As shown in FIG. 6, a present method 100 for modifying an airflow to an aircraft compartment, with the method comprising engaging 102 an airflow distribution sub-assembly to a primary airflow distribution assembly, with the airflow distribution sub-assembly comprising a conduit that can be an enclosed conduit, that can be a tubular, flexible element that can be a hose element, with the conduit comprising a conduit first end and a conduit second end, said conduit first end configured to releasably engage with said at least one airflow distribution assembly outlet, an airflow distribution sub-assembly connector comprising an airflow distribution sub-assembly connector first segment, and an airflow distribution sub-assembly connector second segment, said airflow distribution sub-assembly connector second segment in fixed communication with the conduit first end, with the airflow distribution sub-assembly connector first segment, with the airflow distribution sub-assembly connector second segment configured to releasably mate with one another, and a sub-assembly airflow diffuser in communication with the conduit second end. With the sub-assembly airflow diffuser configured to dispense the second airflow from the sub-assembly airflow diffuser to an aircraft compartment second footprint, and wherein said primary airflow distribution assembly is configured to dispense a first airflow to an aircraft compartment first footprint, with the first airflow comprising a first airflow condition. The conduit is referred to equivalently herein as an "airflow conduit" and/or an "enclosed airflow conduit".

The method 100 further comprises directing and/or redirecting 104 at least a portion of a first airflow to form a second airflow, with the said first airflow comprising a first airflow condition, and dispensing 106 the second airflow from the sub-assembly airflow diffuser directly to an aircraft compartment second footprint, and wherein said second airflow comprises a second airflow condition, with the compartment second footprint configured to be smaller than the aircraft compartment first footprint.

According to a further present aspect, the first airflow condition comprises at least one of a first airflow temperature, a first airflow humidity, and a first airflow velocity as measured in an aircraft compartment first footprint, and the second airflow condition comprises at least one of a second airflow temperature, a second airflow humidity, and a second airflow velocity humidity and a second airflow temperature as measured in an aircraft compartment second footprint. The present modified airflow distribution and the present airflow distribution system sub-assembly can desirably establish varying airflow conditions across various zones or regions within a large aircraft cargo compartment. That is, certain types of aircraft cargo in certain regions of a cargo compartment, and within an overall large first footprint, may be able to tolerate and be unaffected by significantly fluctuating condition value ranges certain airflow conditions. The first footprint of a cargo area can contain nearly the entirety of an aircraft cargo compartment, and cargo in certain areas of the first footprint may tolerate significant changes in airflow condition (e.g., where livestock is not housed). According to present aspects, the airflow conditions from the primary airflow distribution system can still satisfy the demands of such non- high-value livestock the cargo first footprint. In addition, the present airflow distribution system sub-assembly that direct an airflow having consistent airflow conditions with airflow "cycling" significantly lessened, is located proximate to the high-value livestock, and better addresses the airflow condition needs of such livestock located within a second footprint, with the second footprint being significantly smaller than the cargo compartment first footprint.

In addition to previous airflow systems that sustained airflow cycling disadvantageous to some high-value livestock, the existence of and placement of various animal crates within an aircraft cargo compartment can contribute to the interruption of a desired airflow (and/or otherwise interfere with a desired airflow pattern) within an aircraft cargo compartment. According to present aspects, providing and locating the present airflow distribution sub-assemblies directly proximate to an animal crate (e.g., a cargo sub-compartment housing high-value livestock) significantly increases the otherwise ensures the delivery of an airflow having selected airflow conditions configured to increase the health and comfort of transported high-value livestock positioned to receive consistent and selected airflow conditions.

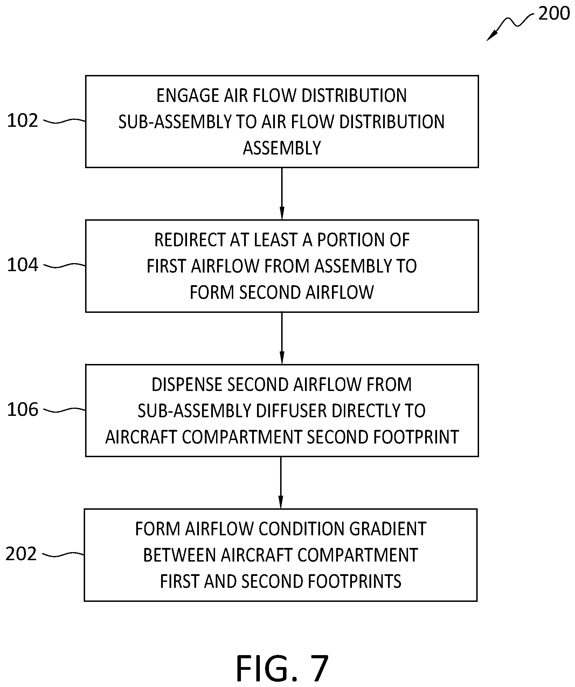

According to present aspects, the second airflow condition as measured within the aircraft compartment second footprint is different from the first airflow condition as measured beyond the aircraft compartment second footprint. Accordingly, FIG. 7 outlines a method 200 comprising the steps of method 100 set forth herein, and further comprising forming 202 an airflow condition gradient between the aircraft compartment first footprint and the aircraft compartment second footprint.

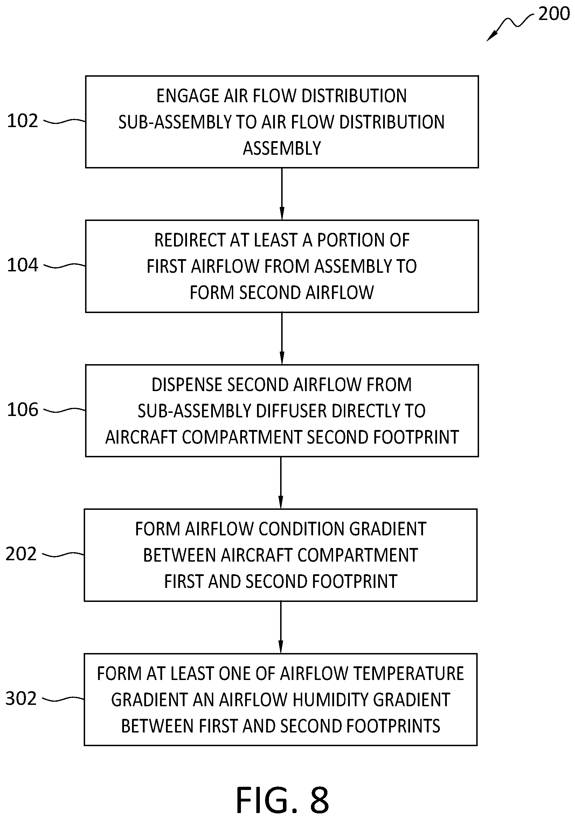

FIG. 8 outlines a method 300 comprising the steps of method 200 (including the steps of method 100) set forth herein, and further comprising forming 302 an airflow condition gradient that is at least one of an airflow temperature gradient and an airflow temperature gradient between aircraft compartment first footprint and the aircraft compartment second footprint.

The apparatuses, systems, and sub-assemblies shown in at least of FIG. 1, 2, 3, 4, and 5 and described herein can be used to perform the one or more of the methods 100, 200, 300 as shown in FIGs. 6, 7, and 8 and described herein.

The present aspects may, of course, be carried out in other ways than those specifically set forth herein without departing from essential characteristics of the present disclosure. The present embodiments are to be considered in all respects as illustrative and not restrictive, and all changes coming within the meaning and equivalency range of the present aspects are intended to be embraced therein.

[Clause 1] An aircraft airflow distribution system for an aircraft compartment, the airflow distribution system comprising: an airflow distribution assembly in communication with an airflow source, said airflow distribution assembly comprising an airflow distribution assembly diffuser comprising an airflow distribution assembly diffuser inlet, said airflow distribution assembly diffuser inlet in communication with the airflow source, said airflow distribution assembly further comprising at least one airflow distribution assembly diffuser outlet, said airflow distribution assembly configured to dispense a first airflow from the at least one airflow distribution assembly diffuser outlet to an aircraft compartment first footprint, said first airflow comprising a first airflow condition consisting of at least one of a first airflow temperature, a first airflow humidity, and a first airflow velocity, said aircraft compartment comprising an aircraft compartment first footprint; an airflow distribution sub-assembly in communication with the airflow distribution assembly, said airflow distribution sub-assembly configured to receive at least a portion of the first airflow, said airflow distribution sub-assembly comprising: an enclosed conduit, said enclosed conduit comprising an enclosed conduit first end and an enclosed conduit second end, said enclosed conduit first end configured to releasably engage with said at least one airflow distribution assembly diffuser outlet; an airflow distribution sub-assembly airflow diffuser in communication with the enclosed conduit second end, said sub-assembly airflow diffuser configured to dispense a second airflow from a sub-assembly airflow diffuser outlet to an aircraft compartment second footprint, said second airflow comprising a second airflow condition consisting of at least one of a second airflow temperature, a second airflow humidity, and a second airflow velocity; and wherein said aircraft compartment second footprint is smaller than the aircraft compartment first footprint.

[Clause 2] The aircraft airflow distribution system of [Clause 1], wherein the airflow distribution system further comprises: an airflow distribution sub-assembly connector comprising an airflow distribution sub-assembly connector first segment, and an airflow distribution sub-assembly connector second segment, said airflow distribution sub-assembly connector first segment and said airflow distribution sub-assembly connector second segment configured to releasably mate with one another.

[Clause 3] The aircraft airflow distribution system of [Clause 2], wherein said airflow distribution assembly diffuser outlet is in direct communication with the airflow distribution sub-assembly connector first segment, and the enclosed conduit first end is in direct communication with the airflow distribution sub-assembly connector second segment.

[Clause 4] The aircraft airflow distribution system of [Clause 2 or 3], wherein said airflow distribution assembly diffuser outlet comprises the airflow distribution sub-assembly connector first segment, and the enclosed conduit first end comprises the airflow distribution sub-assembly connector second segment.

[Clause 5] The aircraft airflow distribution system of any one of [Clauses 2 to 4], wherein said airflow distribution sub-assembly connector further comprises a releasable locking mechanism.

[Clause 6] The aircraft airflow distribution system of any one of [Clauses 1 to 5], wherein the enclosed conduit comprises a flexible hose.

[Clause 7] The aircraft airflow distribution system of any one of [Clauses 1 to 6], wherein the aircraft compartment is a cargo compartment.

[Clause 8] The aircraft airflow distribution system of any one of [Clauses 1 to 7], wherein the first airflow is configured to condition the aircraft compartment first footprint.

[Clause 9] The aircraft airflow distribution system of any one of [Clauses 1 to 8], wherein the first airflow is dispensed indirectly into the aircraft compartment second footprint.

[Clause 10] The aircraft airflow distribution system of any one of [Clauses 1 to 9], wherein the second airflow is dispensed directly into the aircraft compartment second footprint

[Clause 11] An aircraft compartment comprising the aircraft airflow distribution system of any one of [Clauses 1 to 10].

[Clause 12] An aircraft comprising the aircraft airflow distribution system of any one of [Clauses 1 to 10].

[Clause 13] An airflow distribution sub-assembly for an airflow distribution assembly for an aircraft airflow distribution system, the airflow distribution sub-assembly comprising: an enclosed conduit, said enclosed conduit comprising an enclosed conduit first end and an enclosed conduit second end, said enclosed conduit first end configured to releasably engage with said at least one airflow distribution assembly outlet of the aircraft distribution assembly; an airflow distribution sub-assembly connector comprising an airflow distribution sub-assembly connector first segment, and an airflow distribution sub-assembly connector second segment, said airflow distribution sub-assembly connector second segment in fixed communication with the enclosed conduit first end, said airflow distribution sub-assembly connector first segment said airflow distribution sub-assembly connector second segment configured to releasably mate with one another; and a sub-assembly airflow diffuser in communication with the enclosed conduit second end. said sub-assembly airflow diffuser configured to dispense a second airflow directly to an aircraft compartment second footprint.

[Clause 14] The airflow distribution sub-assembly of [Clause 13], wherein the enclosed conduit second end is integral with the sub-assembly airflow diffuser.

[Clause 15] The airflow distribution sub-assembly of [Clause 13 or 14], wherein the enclosed conduit first end is integral with the airflow distribution sub-assembly connector second segment.

[Clause 16] The airflow distribution sub-assembly of any one of [Clause 13 to 15], wherein said airflow distribution sub-assembly is configured to engage a primary airflow distribution assembly diffuser outlet of a primary airflow distribution assembly.

[Clause 17] An aircraft compartment comprising the airflow distribution sub-assembly of any one of [Clause 13 to 16].

[Clause 18] An aircraft comprising the airflow distribution sub-assembly of Claim any one of [Clause 13 to 16].

[Clause 19] A method for modifying an airflow to an aircraft compartment, the method comprising: engaging an airflow distribution sub-assembly to an airflow distribution assembly, said airflow distribution sub-assembly comprising: an enclosed conduit, said enclosed conduit comprising an enclosed conduit first end and an enclosed conduit second end, said enclosed conduit first end configured to releasably engage with said at least one airflow distribution assembly outlet; an airflow distribution sub-assembly connector comprising an airflow distribution sub-assembly connector first segment, and an airflow distribution sub-assembly connector second segment, said airflow distribution sub-assembly connector second segment in fixed communication with the enclosed conduit first end, said airflow distribution sub-assembly connector first segment and said airflow distribution sub-assembly connector second segment configured to releasably mate with one another; a sub-assembly airflow diffuser in communication with the enclosed conduit second end. said sub-assembly airflow diffuser configured to dispense the second airflow from the sub-assembly airflow diffuser to an aircraft compartment second footprint; wherein said airflow distribution assembly is configured to dispense a first airflow to an aircraft compartment first footprint, said first airflow comprising a first airflow condition; redirecting at least a portion of a first airflow to form a second airflow, said first airflow comprising a first airflow condition; dispensing the second airflow from the sub-assembly airflow diffuser directly to an aircraft compartment second footprint; and wherein said second airflow comprises a second airflow condition, said compartment second footprint configured to be smaller than the aircraft compartment first footprint.

[Clause 20] The method of [Clause 19], wherein the first airflow condition comprises at least one of a first airflow humidity and a first airflow temperature measured in the compartment, and wherein the second airflow condition comprises at least one of a second airflow humidity and a second airflow temperature.

[Clause 21] The method of [Clause 19 or 20], wherein the second airflow condition as measured within the aircraft compartment second footprint is different from the first airflow condition as measured beyond the aircraft compartment second footprint.

[Clause 22] The method of any one of [Clauses 19 to 21], further comprising: forming an airflow condition gradient between the aircraft compartment first footprint and the aircraft compartment second footprint.

[Clause 23] The method of any one of [Clauses 19 to 22], further comprising: forming at least one of an airflow temperature gradient and an airflow temperature gradient between aircraft compartment first footprint and the aircraft compartment second footprint.

## Claims

1. An airflow distribution sub-assembly (30) for an airflow distribution assembly (23) for an aircraft airflow distribution system (20), the airflow distribution sub-assembly (30) comprising:
an enclosed conduit (32), said enclosed conduit comprising an enclosed conduit first end (32a) and an enclosed conduit second end (32b), said enclosed conduit first end (32a) configured to releasably engage with at least one airflow distribution assembly outlet (24b) of the airflow distribution assembly (23); and
a sub-assembly airflow diffuser (34) in communication with the enclosed conduit second end (32b), said sub-assembly airflow diffuser (34) being configured to dispense a second airflow (36) directly to an aircraft compartment second footprint (38).

2. The airflow distribution sub-assembly of Claim 1, wherein an airflow distribution sub-assembly connector (40) comprising an airflow distribution sub-assembly connector first segment (42), and an airflow distribution sub-assembly connector second segment (44), said airflow distribution sub-assembly connector second segment (44) in fixed communication with the enclosed conduit first end (32a), said airflow distribution sub-assembly connector first segment (42) said airflow distribution sub-assembly connector second segment (44) configured to releasably mate with one another.

3. The airflow distribution sub-assembly of Claim 1 or 2, wherein the enclosed conduit second end (32b) is integral with the sub-assembly airflow diffuser (34).

4. The airflow distribution sub-assembly of any one of Claim 2 to 3, wherein the enclosed conduit first end (32a) is integral with the airflow distribution sub-assembly connector second segment (44).

5. The airflow distribution sub-assembly of any one of Claims 1 to 4, wherein said airflow distribution sub-assembly (30) is configured to engage a primary airflow distribution assembly diffuser outlet (24b) of an airflow distribution assembly (23).

6. An aircraft airflow distribution system (20) for an aircraft compartment (14), the airflow distribution system comprising:
an airflow distribution assembly (23) in communication with an airflow source, said airflow distribution assembly comprising an airflow distribution assembly diffuser (24) comprising an airflow distribution assembly diffuser inlet (24a), said airflow distribution assembly diffuser inlet in communication with the airflow source, said airflow distribution assembly further comprising at least one airflow distribution assembly diffuser outlet (24b), said airflow distribution assembly configured to dispense a first airflow (26) from the at least one airflow distribution assembly diffuser outlet to an aircraft compartment first footprint (28) of the aircraft compartment (14), said first airflow (26) comprising a first airflow condition consisting of at least one of a first airflow temperature, a first airflow humidity, and a first airflow velocity, said aircraft compartment (14) comprising the aircraft compartment first footprint (28); and
the airflow distribution sub-assembly (30) of any one of claims 1 to 5 in communication with the airflow distribution assembly (23), said airflow distribution sub-assembly 30 configured to receive at least a portion of the first airflow (26).

7. The aircraft airflow distribution system (20) of claim 6, wherein said second airflow (35) comprising a second airflow condition consisting of at least one of a second airflow temperature, a second airflow humidity, and a second airflow velocity; and wherein said aircraft compartment second footprint (38) is smaller than the aircraft compartment first footprint (28).

8. The aircraft airflow distribution system of claim 6 or 7, wherein said airflow distribution assembly diffuser outlet (24b) is in direct communication with the airflow distribution sub-assembly connector first segment (42), and the enclosed conduit first end (32a) is in direct communication with the airflow distribution sub-assembly connector second segment (44).

9. The aircraft airflow distribution system of anyone of claims 6 to 8, wherein said airflow distribution assembly diffuser outlet (24b) comprises the airflow distribution sub-assembly connector first segment (42), and the enclosed conduit first end (32a) comprises the airflow distribution sub-assembly connector second segment (44).

10. The aircraft airflow distribution system of claims 6 to 9, wherein the first airflow (26) is configured to condition the aircraft compartment first footprint (28) and/or the aircraft compartment second footprint (38), and/or the second airflow (35) is dispensed directly into the aircraft compartment second footprint (38).

11. An aircraft compartment (14), preferably a cargo compartment, comprising the airflow distribution sub-assembly of any one of claims 1 to 5.

12. An aircraft (10) comprising the airflow distribution sub-assembly of any one of claims 1 to 5.

13. A method (100) for modifying an airflow to an aircraft compartment, the method comprising:
engaging (102) the airflow distribution sub-assembly (30) of any one of claims 1 to 5 to the airflow distribution system (20) of any one of claims 6 to 12;
wherein said airflow distribution assembly (30) is configured to dispense a first airflow (26) to an aircraft compartment first footprint, said first airflow comprising a first airflow condition;
redirecting (104) at least a portion of a first airflow to form a second airflow;
dispensing (106) the second airflow from the sub-assembly airflow diffuser directly to an aircraft compartment second footprint; and
wherein said second airflow comprises a second airflow condition, said compartment second footprint configured to be smaller than the aircraft compartment first footprint.

14. The method of Claim 13, wherein the second airflow condition as measured within the aircraft compartment second footprint is different from the first airflow condition as measured beyond the aircraft compartment second footprint.

15. The method (200) of Claim 13 or 14, further comprising:
forming (202) an airflow condition gradient between the aircraft compartment first footprint and the aircraft compartment second footprint; and/or
forming (302) at least one of an airflow temperature gradient and an airflow temperature gradient between aircraft compartment first footprint and the aircraft compartment second footprint.
